(19) Europäisches Patentamt
European Patent Office
Office européen des brevets

(11) Veröffentlichungsnummer: **0 340 637**
**A2**

# (12) EUROPÄISCHE PATENTANMELDUNG

(21) Anmeldenummer: **89107647.3**

(51) Int. Cl.$^4$: **C08F 4/72**

(22) Anmeldetag: **27.04.89**

Patentanspruch für folgenden Vertragsstaat: ES.

(30) Priorität: **02.05.88 DE 3814862**

(43) Veröffentlichungstag der Anmeldung:
**08.11.89 Patentblatt 89/45**

(84) Benannte Vertragsstaaten:
**BE DE ES FR GB IT NL SE**

(71) Anmelder: **WACKER-CHEMIE GMBH**
**Prinzregentenstrasse 22**
**D-8000 München 22(DE)**

(72) Erfinder: **Eck, Herbert, Dr. Dipl.-Chem.**
**Burg 11**
**D-8263 Burghausen(DE)**
Erfinder: **Fleischmann, Gerald, Dr. Dipl.-Chem.**
**Karrerweg 23**
**D-8261 Emmerting(DE)**

## (54) Polymerisationsinitiatoren.

(57) Beschrieben wird ein Katalysatorsystem zur Initiierung von Polymerisationsreaktionen. Das Katalysatorsystem enthält eine Übergangsmetallverbindung von Elementen der 3. bis 8. und 1. Nebengruppe des Periodensystems, sowie eine organische Silicium-, Zinn- oder Germaniumverbindung mit mindestens einer X-H-Funktion (X = Si, Sn, Ge). Das erfindungsgemäße Katalysatorsystem eignet sich zur Initiierung der Polymerisation von einfach oder mehrfach ethylenisch ungesättigten Verbindungen und zur Vernetzung von doppelbindungshaltigen Oligomeren oder Polymeren. Es kann auch zur Herstellung lösungsmittelfreier Beschichtungen und zur Herstellung von vernetzten oder unvernetzten Formmassen verwendet werden.

EP 0 340 637 A2

## Polymerisationsinitiatoren

Die Erfindung betrifft ein Katalysatorsystem, das eine Übergangsmetallverbindung und eine Verbindung mit einer X-H-Funktion (X = Si, Ge, Sn) enthält, zur Initiierung von Polymerisationsreaktionen.

Katalysatorsysteme mit Si-H-Funktionen enthaltenden Verbindungen und Übergangsmetallkomplexen sind vor allem zur Herstellung von Niederdruckpolyethylen gebräuchlich. Zum Beispiel wird in der DE-A 28 09 337 ein Verfahren zur Niederdruckpolymerisation von Ethylen beschrieben, das ein Katalysatorsystem bestehend aus Dialkylaluminiumhydrid, Wasserstoffpolysiloxan, $TiCl_4$ und Verbindungen der Formeln $Ti(OR)_4$ bzw. $TiCl_3(OR)$ (R = Alkyl) enthält.

In der DE-B 11 23 473 wird ein Verfahren zur Polymerisation von Verbindungen der Formel $CH_2 = CHR$ (R = H, Alkyl, Cl) beschrieben, wobei zur Katalyse ein System aus SiH-Verbindung und einer Übergangsmetallverbindung von Metallen der 4.-6. Nebengruppe des Periodensystems eingesetzt wird.

Die DE-C 11 91 105 beschreibt ein Verfahren zur Polymerisation von $\alpha$ -monoolefinisch ungesättigten Verbindungen in Gegenwart von Siliciumwasserstoffverbindungen, Verbindungen der Metalle der 4. bis 6. Nebengruppe des Periodensystems, gegebenenfalls unter Zusatz von Wasserstoffdonatoren.

Nachteilig bei allen diesen Verfahren ist, daß die dort beschriebenen Katalysatorsysteme sehr empfindlich gegenüber protischen Lösungsmitteln, wie Wasser und Alkohole, sind und spontan mit Luftsauerstoff reagieren. Die Polymerisation ist daher nur unter Schutzgas und in inerten Lösungsmitteln möglich. Außerdem sind diese Katalysatorsysteme im allgemeinen nur zur Polymerisation von $\alpha$ - olefinen einsetzbar.

Übergangsmetallkatalysatoren werden bei der Polymerisation von ethylenisch ungesättigten Verbindungen normalerweise zusammen mit Peroxiden, Persulfaten oder Aziden als Initiatoren eingesetzt (US-A 3,644,307, C.A. 98 216069), da sie per se nur eine schwache Wirkung haben. Nishikawa (C.A. 71 39506) beschreibt die Polymerisation von Butadien und Styrol mit Acetylacetonat-Komplexen von Co, Ni, V und Cu. Selbst bei sehr langer Reaktionszeit resultiert ein nur sehr geringer Umsatz.

Es bestand daher die Aufgabe, ein Katalysatorsystem zu entwickeln, das möglichst universell zur Polymerisation von einfach oder mehrfach ethylenisch ungesättigten Verbindungen, ohne die oben genannten Nachteile, unter schonenden Bedingungen, bei kurzer Reaktionszeit und in Gegenwart von Luftsauerstoff oder polaren Lösungsmitteln bzw. Suspensionsmedien,wie Wasser, einsetzbar ist. Außerdem sollte sich das Katalysatorsystem auch zur Polymerisation von lösungsmittelfreien Beschichtungen und zur Herstellung von Formmassen eignen.

Gegenstand der Erfindung ist ein Katalysatorsystem zur Initiierung von Polymerisationsreaktionen ethylenisch ungesättigter Verbindungen in Gegenwart von Luftsauerstoff, gegebenenfalls Schutzgas, und gegebenenfalls in Gegenwart protischer Lösungsmittel, dadurch gekennzeichnet, daß das System

A) eine Übergangsmetallverbindung von Elementen der 3. bis 8. und 1. Nebengruppe des Periodensystems und

B) eine, mindestens eine X-H-Funktion enthaltende, organische Verbindung, wobei X die Bedeutung Si, und gegebenenfalls Ge oder Sn hat,

enthält.

Die erfindungsgemäße Lösung der Aufgabe war sehr überraschend, da derartige Systeme bisher nur zur Polymerisaton von $\alpha$ -Olefinen unter Schutzgas eingesetzt wurden. Vor allem aber werden ähnliche Katalysatorzusammensetzungen zur Hydrosilylierung ethylenisch ungesättigter Verbindungen, das heißt zur Addition von SiH-Verbindungen an C = C-Doppelbindungen eingesetzt. Überraschenderweise ist diese Nebenreaktion beim Einsatz von SiH-Verbindungen als Komponente B im allgemeinen vernachlässigbar, lediglich bei der Polymerisation von Allylverbindungen kann sie, abhängig vom Katalysatorsystem, als Nebenreaktion auftreten. Dies gilt insbesonders bei Metallen der Pt-Gruppe.

Als Komponente A werden Übergangsmetallverbindungen von Metallen der 3. bis 8., und 1. Nebengruppe des Periodensystems, vorzugsweise Komplexe von Mangan, Eisen, Cobalt, Rhodium, Iridium, Platin, Kupfer, Titan, Vanadium, Chrom, Erbium, Gadolinium, oder Scandium eingesetzt.

Geeignete Komplexliganden sind: $\beta$ -Diketonliganden, wie Acetylaceton und $\beta$ -Ketosäureester, wie Acetessigester, und die entsprechenden Thioverbindungen; Phosphine, wie Triphenylphosphin; Phosphite; Amide, wie Hexamethylphosphorsäuretriamid; Ether; Polyether; Kronenether; sowie schwach basische, komplexbildende Amine, wie Kryptofix$^R$ 5 und Kryptofix$^R$ 222 von Merck, Thioäther und gegebenenfalls Diene, wie z. B. Butadien, Cyclopentadien, Dicyclopentadien, Norbornadien, Cyclooctadien und deren Derivate.

Geeignete Anionen sind zum Beispiel Halogene, Sulfate, Sulfonate, Perchlorate, Carbonate, sowie Carboxylate substituierter oder unsubstituierter, verzweigter oder unverzweigter aliphatischer, araliphatischer

oder aromatischer Carbonsäuren, ferner Alkoholate und Mercaptide.

Folgende Übergangsmetallverbindungen seien vorzugsweise genannt: Kobalt(II)acetylacetonat: Kobalt(II)isobutyrat; Co(II)benzoylacetonat; Co(II)chloridhydrat, Bistriphenylphosphin-Co(II)chlorid; Chrom(III)chlorid in THF; Eisen(III)-2-ethylhexanoat; Fe(III)stearat; Fe(III)-acetylacetonat; Fe(II)methoxylat; Erbiumacetylacetonat; Gadoliniumacetylacetonat; Chloro(1,5-cyclooctadien)iridium(I)-dimer; Kupfer(II)ethylat; Cu(II)acetylacetonat; Cu(II)hexafluoracetylacetonat; Tristriphenylphosphin-Cu(I)chlorid; Mangan(II)- und Mangan(III)acetylacetonat, Mn(II)-2-ethylhexanoat; Mn(II)-cyclohexylbutyrat; Tris-triphenylphoshin-Ni(II)chlorid; Palladium(II)hexafluoracetylacetonat; Cyclooctadienylpalladium(II)chlorid; Cyclooctadienplatin(II)chlorid; Dichlorobis(benzonitril)platinium(II); Pt(II)-hexafluoroactylacetonat; Chloro(1,5-cyclooctadien)rhodium(I)-dimer; (Bicyclo[2,2,1]hepta-2,5-dien)rhodium(I)-chlorid-dimer; Acetylacetonato-bis-(ethylen)rhodium(I); Tris-(dimethylphenylphosphin)norbornadien-rhodium; Dicarbonylacetylacetonatrhodium(I); Bis(1,3-diphenyl-1,3-propionato)rhodium(III)acetat; Ruthenium(III) hexafluoracetylacetonat; Titan(IV)n-butylat; Ti(IV)isopropylat; Ti(IV)ethylat; Vanadium(II)oxid-iso-propylat [=VO-(Oisoprop)]; Vanadylacetylacetonat; Zirkon(IV) isopropylat; Bis(cyclopentadienyl)zirkoniumdichlorid; Scandium(III)acetyl-acetonat; sowie ein Pt-Katalysator nach DE-A 2724822

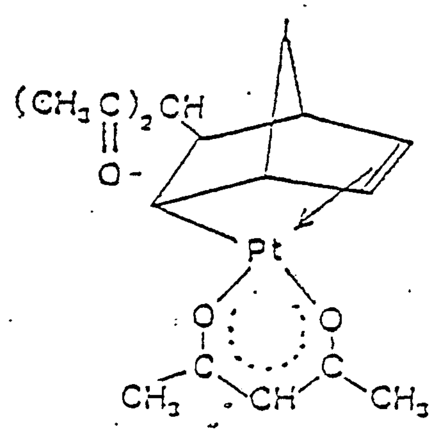

(abgekürzt "Pt-Kat.")

Die Übergangsmetallverbindung wird in einer Menge von 1 bis 1000 Mol-ppm, bezogen auf das Monomere, eingesetzt. Bei der Polymerisation im Reaktor werden vorzugsweise 1 bis 100 Mol-ppm, besonders bevorzugt 2 bis 10 Mol-ppm, bezogen auf Monomer, eingesetzt. Zur Polymerisationsinitierung bei der Herstellung von lösungsmittelfreien Beschichtungen oder Formmassen werden vorzugsweise 1 bis 100 Mol-ppm, bezogen auf Monomer, eingesetzt. Werden solche Beschichtungen oder Formmassen durch Vernetzung von Oligomeren oder Polymeren, die C=C-Doppelbindungen enthalten, hergestellt, so werden zur Initiierung 10 bis 1000 Gew.-ppm Metallverbindung, bezogen auf die Polymeren, eingesetzt.

Als Komponente B eignen sich Silane, Siloxane und Carbosilane mit mindestens einer SiH-Funktion. Gegebenenfalls können auch die entsprechenden Germanium- und Zinnverbindungen verwendet werden.

Vorzugsweise verwendet werden Dimethyl-octylsilan, Phenyldimethylsilan, Diphenylmethylsilan, Triethoxysilan, Phenyldiethoxysilan, Pentamethyldisilan, Tetramethyldisilan, Tris(dimethylsiloxy)-silan, Pentamethyldisiloxan, Tetramethyldisiloxan. Dimethyldimethoxydisiloxan, Tetra-H-Methylcyclosiloxan; sowie H-Polysiloxane beliebiger Molekülgröße und mit beliebigen Substituenten (außer Amino- bzw. Thiolgruppen), zum Beispiel Wacker H-Siloxan ( Trimethylsilyl-endblockiertes Poly(methylhydrogensiloxan) ). Verwendbar Zinn- bzw. Germaniumverbindungen sind Alkyl- bzw. Arylsubstituierte Verbindungen mit mindestens einer SnH- bzw. GeH-Funktion; beispielsweise Di- oder Tributylzinnhydrid.

Die Komponente B wird in einem Molverhältnis von mindestens 1 : 1 bezogen auf die Komponente A eingesetzt. Vorzugsweise beträgt das Molverhältnis A : B von 1 : 10 bis 1: 1000.

Zur Erhöhung der Reaktionsgeschwindigkeit ist die Verwendung einers Protonendonators zusätzlich zu den Komponenten A und B, im Katalysatorsystem möglich. Vorzugsweise werden hierzu Carbonsäuren mit 1 bis 4 C-Atom, insbesonders Essigsäure verwendet. Der Protonen-donator wird vorzugsweise in einer Menge von 1 bis 20 Mol-%, bezogen auf die Komponente B, zugegeben.

Durch Zugabe von Komplexbildnern zum Initiatorsystem, wie Kronenethern (z.B. 18-Crown-6), Diglykolen, Diglykolethern (z.B. Diethylenglykol-dialkylether) oder Triphenylphosphin läßt sich die Reaktion beeinflussen. Vorzugsweise beträgt das Verhältnis von Komplexbildner zu Übergangsmetallverbindung mindestens 0,1 : 1 bis 1 : 0,1.

Als Monomere, deren Polymerisation mit dem erfindungsgemäßen Katalysatorsystem initiiert werden

kann, kommen folgende Monomere in Betracht: Vinyl- oder Allylgruppen enthaltende Aromaten, z. B. Styrol; Chlorkohlenwasserstoffe, wie z. B. Vinylchlorid, Allylchlorid, Allylbromid; Vinylester, wie Vinylacetat oder Vinyllaurat, oder die entsprechenden Allylester; N-Vinylamide, wie N-Vinyl-acetamid; N-Vinyl- $\alpha$ -pyrrolidon; N-Vinylcaprolactam; (Meth)-acrylsäure, sowie deren Ester, Amide oder Nitrile; Crotonsäure; Vinylsulfonsäure, sowie deren Ester; N-Vinylharnstoff und ähnliche Verbindungen; Amide oder Ester der Maleinsäure, Derivate der Vinyl- oder Allylkohlensäureester; N-Vinyl-carbaminsäureester; Acrylsilane, wie Methacryloxypropyltri-methoxysilan, Vinylphosphonsäureester, Vinylsulfone, Allyl- und Vinylsilane; Diene wie Butadien u. Isopren, $\alpha$-Olefine, insbesondere Ethylen und Propylen, lassen sich mit diesen Verfahren copolymerisieren. Die Copolymerisationsparameter sind abhängig vom Katalysatorsystem.

Zur Polymerisation vernetzter Polymerisate können die üblichen mehrfach ethylenisch ungesättigten Monomeren eingesetzt werden, wobei der Vernetzungsgrad mit dem Anteil an mehrfach ethylenisch ungesättigtem Monomer in der Monomermischung ansteigt. Beispiele hierfür sind: Divinylbenzol, Divinylsulfon, Diallylphtalat, Allyl(meth)acrylat, Glykoldi(meth)acrylat, Vinylcrotonat, Triallylcyanurat, Triallylphosphat, N,N-Methylenbisacrylamid, N,N,N-Trisacryloylperhydrotriazin, Diallylidenpentaerythritacetal, Triethylenglykoldivinylether.

Polymerisationen unter Initiierung durch das erfindungsgemäße Katalysatorsystem können diskontinuierlich oder kontinuierlich, als Lösungs- oder Fällungspolymerisation, in Emulsion oder in Suspension oder als Perlpolymerisation, in Gegenwart der üblichen Polymerisationshilfsstoffe, durchgeführt werden. Die Polymerisation läßt sich unter Inertgasatmosphäre oder in Gegenwart von Luftsauerstoff durchführen.

Es können die üblichen Lösungs- oder Verdünnungsmittel verwendet werden, wie zum Beispiel Wasser (vorzugsweise in Abwesenheit von Luftsauerstoff), Alkohole, Ester,Ether, Säureamide, Kohlenwasserstoffe, Halogenkohlenwasserstoffe, Silicone und andere flüssige Polymere und Oligomere. Das Polymerisationsverfahren läßt sich sowohl bei Raumtemperatur als auch bei erhöhter Temperatur durchführen. Für gewöhnlich wird bei einer Temperatur von 0 bis 100 °C gearbeitet.

Die Polymerisationsgeschwindigkeit läßt sich mit der Reaktionstemperatur, dem Katalysatortyp, der Katalysatormenge und dem Monomergehalt steuern. Als Hemmstoffe eignen sich bestimmte Amine, wie insbesonders Tetraethylendiamin, oder Acetylene und Mercaptane. Die Kettenlänge der zu erhaltenden Polymeren oder Copolymeren läßt sich zum Beispiel durch Lösungsmittel, Komplexbildner oder durch die Art und Menge des Katalysatorsystems regeln.

Wie oben bereits erwähnt läßt sich das erfindungsgemäße Katalysatorsystem auch zur Vernetzung von Polymeren oder Oligomeren, die C=C-, C=O- oder C=N-Doppelbindungen enthalten, einsetzen. Beispiele hierfür sind: Maleinsäure enthaltende Polyester oder Polyamide; andere ungesättigte Polyester oder Polyamide; Polyharnstoffe, Polyurethane oder Polycarbonate; Acrylreste enthaltende Polysiloxane oder Polycarbosilane; Vinylester oder C=C-Doppelbindungen enthaltende polymere (Halogen)-kohlenwasserstoffe.; mit C=C-Doppelbindungen substituierte Naturpolymere, wie Stärke oder Cellulose.

Das Initiatorsystem wird dabei in den oben beschriebenen Mengen eingesetzt. Die Vernetzung der Oligomeren und Polymeren kann dabei mit oder ohne Lösungs- oder Dispergiermittel erfolgen.

Zur Herstellung von Beschichtungen oder härtbaren Formmassen wird das erfindungsgemäße Initiatorsystem, vorzugsweise ohne Lösungsmittelzusatz, im Gemisch mit den Monomeren oder zusammen mit einer Polymer(Oligomer)-Mischung, die gegebenenfalls noch Monomere beinhaltet, aufgetragen. Zum Erhalt unvernetzter Beschichtungen oder Formmassen setzt man das Katalysatorsystem in den oben genannten Mengen zusammen mit einem oder mehreren einfach ungesättigten Monomeren ein.

Vernetzte Beschichtungen oder Formmassen erhält man zum einen beim Einsatz eines Gemisches aus einfach ethylenisch ungesättigten Monomeren und mehrfach ethylenisch ungesättigten Monomeren; zum anderen durch den Einsatz eines Gemisches aus doppelbindungshaltigen Polymeren (Oligomeren) oder eines Gemisches aus doppelbindungshaltigen Polymeren (Oligomeren) und einfach oder mehrfach ethylenisch ungesättigten Monomeren.

Die Aushärtung der Beschichtungen oder Formmassen kann bei Raumtemperatur oder auch bei erhöhter Temperatur, üblicherweise bei einer Temperatur bis 80 °C erfolgen. Die Beschichtungen lassen sich auf alle gebräuchlichen Substrate auftragen.

Gegenüber radikalischen oder ionischen Polymerisationsverfahren unter Verwendung üblicher Initiatorsysteme bietet das erfindungsgemäße Katalysatorsystem eine Reihe von Vorteilen:

Feuchtigkeit und Luft verhindern die Polymerisation nicht. Man benötigt daher zur Durchführung der Polymerisation kein Schutzgas, sofern man nicht in wäßrigem Medium arbeitet. Die Monomeren und das Lösungsmittel müssen nicht getrocknet werden. Überraschenderweise können, abhängig vom Katalysatorsystem, geringe Mengen an Wasser sogar beschleunigend auf den Polymerisationsverlauf wirken.

Mit dem erfindungsgemäßen Initiatorsystem sind eine große Anzahl unterschiedlicher C=C-doppelbindungshaltiger Verbindungen polymerisierbar. Es lassen sich damit auch doppelbindungshaltige Oligomere

und Polymere mittels einer Polymerisationsreaktion und nicht durch eine Hydrosilylierung vernetzen und/oder aushärten.

Die Polymerisationsreaktion verläuft unter so milden Bedingungen wie sie sonst nur mit Redoxkatalysatoren möglich sind. Radikalfänger müssen aus käuflichen Monomeren nicht entfernt werden, da sie, im Gegensatz zu mit Radikalstartern initiierten Polymerisationen, auch in relativ großen Mengen nicht stören. Im Gegensatz zur radikalischen Initiierung erhält man Produkte mit einer engen Molekulargewichtsverteilung. Man kann auch auf einfache Weise sehr hochmolekulare Polymerisate herstellen; dies ist bei ionisch initiierter Polymerisation nur schwer realisierbar.

Lösungsmittelfreie Beschichtungen oder vernetzte bzw. unvernetzte Formmassen sind bei Einsatz dieses Katalysatorsystem unproblematisch herzustellen.

Der Hauptvorteil des erfindungsgemäßen Initiatorsystems besteht allerdings darin, daß man mit äußerst geringen Katalysatormengen zur Polymerisationsinitiierung auskommt. Im Gegensatz zur radikalischen Polymerisation bei der etwa 0.1 Mol-%, bezogen auf Monomeres, eingesetzt werden liegt hier die eingesetzte Menge an Initiator im ppm-Bereich.

Die folgenden Beispiele dienen zur weiteren Erläuterung der Erfindung:

Beispiel 1 bis 17 (Tabelle 1):

In den Beispielen 1 bis 16 wurde ohne Lösungsmittelzusatz gearbeitet; die Monomeren wurden vorgelegt, die Komponenten des Initiatorsystems zudosiert. Die Polymerisationen wurden bei 60 °C durchgeführt. Die Art der Monomeren, die Komponenten des Katalysatorsystems, sowie die Reaktionszeit sind in Tabelle 1 beschrieben.

In den Beispielen 1 und 9 wurde unter Inertgas (Argon) gearbeitet.

In Beispiel 12 wurde Wacker-Silan GF 31 als Monomeres eingesetzt, dabei handelt es sich um Methacryloxypropyltrimethoxysilan.

Beispiel 17 beschreibt die Polymerisation eines Monomerengemisches aus Vinyllaurat und Butylacrylat.

Beispiel 18 bis 29 (Tabelle 2):

In den Beispielen 18 bis 29 wurde die Polymerisation in Lösung durchgeführt. Dabei wurden das Lösungsmittel und die Komponenten des Initiatorsystems vorgelegt und die Monomeren eingerührt. Die Polymerisationstemperatur betrug 60 °C. Die Art der Monomeren, die Komponenten des Katalysatorsystems, die Reaktionszeit, sowie der Umsatz, sind in Tabelle 2 aufgeführt.

Vergleichsbeispiele 1 bis 3 (Tabelle 2):

Die Polymerisationen wurden analog Beispiel 1 bis 16 ohne Zusatz von Lösungsmittel ausgeführt. Die Vergleichsbeispiele 1 und 2 wurden analog Beispiel 9 durchgeführt. In Vergleichsbeispiel 1 wurde nur die Komponente B des Initiatorsystems, in Vergleichsbeispiel 2 nur die Komponente A eingesetzt.

In Vergleichsbeispiel 3 wurde Hydrochinon als Radikalfänger zugesetzt. Die Polymerisationsreaktion wurde dadurch nicht beeinträchtigt.

Beispiel 30 bis 33:

Die Beispiele 30 bis 33 betreffen die Polymerisation mit dem erfindungsgemäßen Initiatorsystem unter Zugabe von Komplexbildnern.

Beispiel 30:

In einer Standardglasapparatur bestehend aus Dreihalskolben, Dosiergefäß, Rückflußkühler, sowie Rührer, Widerstandsthermometer und geregeltem Heizbad, wurden 75 ml Toluol auf 60 °C erwärmt. Nach Zugabe von 0.2 ml einer Chloroformlösung, die 20 mmol/l $Co(acac)_2$, 20 mmol/l 18-Crown-6 enthielt und Zugabe von 1.3 mmol Pentamethyldisiloxan, wurden 702 mmol Butylacrylat innerhalb einer Stunde unter

Rühren zugetropft. Die Reaktionsmischung wurde weitere 5 Stunden bei 60 bis 65° C gerührt. Bereits nach 6 Stunden Reaktionszeit betrug die Ausbeute 72%.

Beispiel 31:

Analog Beispiel 30 wurden 351 mmol Butylacrylat und 523 mmol Vinylacetat in 75 ml t-Butylmethylether, unter Zugabe von 0.5 ml einer Chloroformlösung, die 20 mmol/l $Co(acac)_2$ und 20 mmol/l Triphenylphosphin enthielt und Zugabe von 3.3 mmol Pentamethyldisiloxan enthielt, polymerisiert. Die Ausbeute betrug 56 %.

Beispiel 32:

Analog Beispiel 31 wurde anstelle einer 20-mmolaren Triphenylphenylphosphin-Lösung eine 20-mmolare Kryptofix 5-Lösung eingesetzt. Die Ausbeute betrug 70 %.

Beispiel 33:

Analog Beispiel 30 wurden 663 mmol Butylacrylat und 28 mmol Acrylsäure-2-bromethylester, unter Zugabe von 1 ml einer 20-millimolaren Lösung von $Co(acac)_2$ in einer Mischung aus 95 % Chloroform und 5 % Diethylenglykol-dimethylether und von 6.6 mmol Pentamethyldisiloxan, polymerisiert. Die Ausbeute betrug 56 %.

Beispiel 34:

45 g (523 mmol) Vinylacetat werden auf 60° C erwärmt. Nach Zugabe von 1 ml Pentamethyldisiloxan und 1 ml einer Chloroform-Lösung, die 20-mmolar an $Mn(acac)_3$ und 20-mmolar an Triphenylphosphin ist, werden 45 g (351 mmol) Butylacrylat innerhalb von 1 h unter Rühren zugetropft. Anschließend wird die viskoser werdende Reaktionsmischung 16 h bei 60 bis 65° C langsam gerührt. Danach wird das Restmonomere im Vakuum entfernt. Der Vinylacetatgehalt des Polymers beträgt 33 %. Die Ausbeute betrug 62 %.

Beispiel 35 bis 47 (Tabelle 3):

In den Beispielen 35 bis 40 wurden doppelbindungshaltige Oligomere bzw. Polymere ohne Zusatz von Lösungsmittel, nach Zumischung der Komponenten A und B des Polymerisationsinitiatorsystems, bei 60° C vernetzt. Die Art der Oligomeren und Polymeren, der Komponenten A und B, sowie die Reaktionszeit sind in Tabelle 3 angegeben.
In den Beispielen 41 und 42 wurde die Vernetzung in Lösung durchgeführt.
Die Beispiele 43 bis 46 demonstrieren die Vernetzung von Gemischen aus Oligomeren bzw. Polymeren mit Monomer, unter Initiierung durch das erfindungsgemäße Katalysatorsystem, bei 60° C. Das Oligo- bzw. Polymer wurde dabei, im Monomeren gelöst, vorgelegt, der Katalysator zudosiert.

Beispiel 47:

In eine Lösung aus 1,7 g Polyvinylalkohol der Höpplerviskosität 5 mPa.s und der Verseifungszahl 140 in 12 g Wasser wurden zuerst 0,4 g H-Siloxan und anschließend 20 g einer Lösung von 0.2 mmol $Co(acac)_2$ in 260 mmol Butylacrylat einemulgiert und 18 Stunden bei 60° C unter Rühren vernetzt. Es wurde eine stabile Dispersion erhalten.

Beispiel 48:

Dieses Beispiel demonstriert den Einsatz des erfindungsgemäßen Initiatorsystems zur Herstellung von

lösungsmittelfreien Beschichtungen anhand der Hydrophobierung eines Kartons:
Auf einen Karton mit einer Fläche von 100 $cm^2$ wurde bei Raumtemperatur eine Mischung aus 20 mmol Methylmethacrylat, 5 mmol $(HSiCH_3O)_4$ und 0.0035 mmol $Co(acac)_2$ aufgetragen. Die Aushärtung erfolgte bei Raumtemperatur an der Luft. Benetzungsprüfung nach 3 Wochen:
Auf einem unbehandelten Karton (Vergleichsprobe) beginnt ein Wassertropfen sofort einzudringen. Bei obigem Karton konnte erst nach 25 Minuten eine schwache Benetzung beobachtet werden. Nach 75 Minuten war der Tropfen teilweise verdampft, teilweise eingedrungen.

Tabelle 1

| Bsp. | Monomer Art | Monomer mmol | Komponente A Art | Komponente A mmol | Komponente B Art | Komponente B mmol | Reaktionszeit (h) | Umsatz (%) |
|---|---|---|---|---|---|---|---|---|
| 1 | Butylacrylat | 15 | Pt-Kat. | 0,015 | $(C_6H_5)_2MeSiH$ | 1,5 | 10 | 96 |
| 2 | " | " | " | 0,0015 | $(HSiMe_2)_2O$ | 4,5 | 2 | 93 |
| 3 | " | " | $(ClRh(C_8H_{12}))_2$ | 0,002 | $HSi(OSiMe_2H)_3$ | 5 | 4 | 100 |
| 4 | " | " | $Mn(acac)_2$ | 0,0035 | H-Siloxan | 5 | 20 | 95 |
| 5 | " | " | $Fe(acac)_3$ | 0,0025 | $(HSiCH_3O)_4$ | 5 | 20 | 92 |
| 6 | " | " | $(ClRh(C_7H_8))_2$ | 0,0002 | H-Siloxan | 5 | 20 | 90 |
| 7 | " | 10 | $Co(acac)_2$ | 0,0035 | $(EtO)_3SiH$ | 10 | 20 | 100 |
| 8 | Methylmethacrylat | 20 | $Co(acac)_2$ | 0,0035 | $(HSiCH_3O)_4$ | 5 | 1 | 100 |
| 9 | Vinylacetat | 23 | $Co(acac)_2$ | 0,0038 | H-Siloxan | 5 | 1 | 95 |
| 10 | Styrol | 25 | $Co(acac)_2$ | 0,0035 | H-Siloxan | 5 | 20 | 90 |
| 11 | Allylchlorid | 27 | $(ClRh(C_7H_8))_2$ | 0,0002 | H-Siloxan | 5 | 2 | 90 |
| 12 | Silan GF 31 | 8 | $Co(acac)_2$ | 0,002 | H-Siloxan | 5 | 0,5 | 95 |
| 13 | Vinylcaprolactam | 20 | $Co(acac)_2$ | 0,002 | H-Siloxan | 5 | 2 | 90 |
| 14 | N-Vinylpyrolidon | 17 | $Co(acac)_2$ | 0,002 | H-Siloxan | 5 | 12 | 90 |
| 15 | 3-Brompropen | 18 | $(ClRh(C_7H_{10}))_2$ | 0,002 | H-Siloxan | 5 | 1 | 75 |
| 16 | OH-Ethylacrylat | 17 | $(Co(acac)_2$ | 0,002 | $(HSiCH_3)_4$ | 0,5 | 0,5 | 100 |
| 17 | Vinyllaurat<br>Butylacrylat | 7<br>1 | $(Co(acac)_2$ | 0,002 | H-Siloxan | 5 | 24 | 96 |

Tabelle 2

| Bsp. | Monomer Art | Monomer mmol | Lösungsmittel | Komponente A Art | Komponente A mmol | Komponente B Art | Komponente B mmol | Reaktionszeit (h) | Umsatz (%) |
|---|---|---|---|---|---|---|---|---|---|
| 18 | Butylacrylat | 75 | 10 ml Methyltrasil | Co(acac)$_2$ | 0,03 | H-Siloxan | 25 | 15 min | 95 |
| 19 | Vinylacetat | 20 | 2 ml Butylacetat | Co(acac)$_2$ | 0,0035 | H-Siloxan | 5 | 24 | 99 |
| 20 | Butylacrylat<br>Silan GF 31 | 500<br>1 | 50 ml t-Butyl-methylether | Co(acac)$_2$ | 0,0013 | $CH_3(OSiMe_2)_2H$ | 5 | 2 | 100 |
| 21 | Methylmethacrylat | 500 | 50 ml THF | $Ti(CH_3)_4$ | 4,8 | $(HSiMe_2)_2O$ | 5,6 | 10 | 100 |
| 22 | " | 250 | 25 ml THF | Sc(III)acetat-Hydrat | 0,045 | " | 5,6 | 20 | 46 |
| 23 | " | 250 | 25 ml THF | $CoCl_2 \cdot 6H_2O$ | 0,042 | " | 5,6 | 8 | 100 |
| 24 | " | 250 | 25 ml THF | Cu(II)cyclohexylbutyrat | 0,049 | " | 5,6 | 7 | 96 |
| 25 | " | 250 | 25 ml THF | V(V)tripopoxid | 2,06 | " | 5,6 | 7 | 100 |
| 26 | " | 250 | 25 ml THF | $CrCl_3$-THF-Komplex | 0,267 | " | 5,6 | 16 | 100 |
| 27 | " | 250 | 25 ml THF | Ta(V)methoxid | 0,30 | " | 5,6 | 7 | 26 |
| 28 | Butylacrylat | 117 | 35 ml Octan | $ZrCl_2Cp_2$ | 0,08 | Pentamethyldisiloxan | 6,7 | 5 | 34 |
| 29 | " | 117 | 35 ml Octan | In(acac)$_3$ | 0,065 | " | 6,7 | 18 | 24 |

<u>Tabelle 2</u> Fortsetzung

| Bsp. | Monomer | | Lösungsmittel | Komponente A | | Komponente B | | Reaktionszeit (h) | Umsatz (%) |
|---|---|---|---|---|---|---|---|---|---|
| | Art | mmol | | Art | mmol | Art | mmol | | |
| Vgl.bsp.1 | Vinylacetat | 23 | – | – | | H-Siloxan | 5 | 120 | 0 |
| Vgl.bsp.2 | Vinylacetat | 23 | – | $Co(acac)_2$ | 0,0038 | – | | 24 | 10 |
| Vgl.bsp.3 | Butylacrylat<br>Hydrochinon | 15<br>0,1 | – | $Co(acac)_2$ | 0,002 | H-Siloxan | 5 | 2 | 90 |

Tabelle 3

| Bsp. | Monomer/Oligomer/Polymer Art | Menge | Lösungsmittel | Komponente A Art | mmol | Komponente B Art | mmol | Reaktions-zeit (h) | Umsatz |
|---|---|---|---|---|---|---|---|---|---|
| 35 | 6-447 | 10 g | - | $(ClRh(C_8H_{12}))_2$ | 0,002 | H-Siloxan | 0,005 | 4 | vernetzt |
| 36 | 16-745/8 | " | - | $(ClRh(C_8H_{12}))_2$ | 0,002 | H-Siloxan | 0,005 | 4 | " |
| 37 | 16-745/8 | " | - | $Co(acac)_2$ | 0,0035 | H-Siloxan | 5 | 1 | " |
| 38 | LL 288/1 | " | - | $(ClRh(C_8H_{12}))_2$ | 0,002 | H-Siloxan | 0,005 | 4 | " |
| 39 | VP 1528 | " | - | $(ClRh(C_8H_{12}))_2$ | 0,002 | H-Siloxan | 0,005 | 20 | " |
| 40 | VP 1528 | " | - | $(ClRh(C_8H_{12}))_2$ | 0,002 | $(HSiCH_3O)_4$ | 5 | 1 Minute | " |
| 41 | LL 288/3 | " | 2 ml Toluol | $Co(acac)_2$ | 0,0035 | H-Siloxan | 5 | 20 | " |
| 42 | LL 288/3 | " | 2 ml THF | $Co(acac)_2$ | 0,0035 | H-Siloxan | 5 | 4 | " |
| 43 | Vinylacetat<br>Vinnapas B 100 | 40 mmol<br>2 g | - | $Co(acac)_2$ | 0,0035 | H-Siloxan | 5 | 1 | " |
| 44 | Butylacrylat<br>VAE-651 | 45 mmol<br>1 g | - | $Co(acac)_2$ | 0,0035 | H-Siloxan | 5 | 24 | " |
| 45 | Butylacrylat<br>Methylmethacrylat<br>VAE-651 | 15 mmol<br>40 mmol<br>1 g | - | $Co(acac)_2$ | 0,0035 | H-Siloxan | 5 | 24 | " |
| 46 | Butylacrylat<br>Vinyllaurat<br>VAE-651 | 15 mmol<br>15 mmol<br>1 g | - | $Co(acac)_2$ | 0,0035 | H-Siloxan | 5 | 24 | " |
| 47 | Butylacrylat<br>PVOH | 260 mmol<br>1,7 g | 12 ml Wasser | $Co(acac)_2$ | 0,2 | H-Siloxan | | 18 | " |

Tabelle 3 (Fortsetzung)

| | | |
|---|---|---|
| VP 1528: | Produkt der Wacker-Chemie | $CH_2{=}CH{-}CO_2(CH_2)_3SiMe_2{-}(OSiMe_2)_{ca.12}{-}(CH_2)_3OCO{-}CH{=}CH_2$ |
| 6-447: | Versuchsprodukt der Wacker-Chemie | Analog VP 1528, aber Molgewicht: 47000 (~640 $SiMe_2O$-Einheiten) |
| 16-745/8: | Versuchsprodukt der Wacker-Chemie | Analog VP 1528, aber Molgewicht:ca.33000 (~450 $SiMe_2O$-Einheiten) |
| LL 288/1: | Produkt der Wacker-Chemie | $CH_2{=}CH{-}CO_2CH_2CH_2O(CO(CH_2)_5NH)_nCONH(CH_2)_6NHCO(NH(CH_2)_5CO)_nOCH_2CH_2OCO{-}CH{=}CH_2$; $n \approx 2{,}1$; MG: ~ 900 |
| LL 288/3: | Produkt der Wacker-Chemie | analog LL 288/1; $n \approx 6{,}1$; MG: ~1800 |
| Vinnapas B 100: | Produkt der Wacker-Chemie | Polyvinylacetat, K-Wert: $43 \pm 2$; Polymerisationsgrad: 600 |
| VAE-651: | Produkt der Wacker-Chemie | Vinylacetat-Ethylen-Copolymeres mit ca. 40 % Ethylengehalt |

## Ansprüche

1. Katalysatorsystem zur Initiierung von Polymerisationsreaktionen ethylenisch ungesättigter Verbindungen in Gegenwart von Luftsauerstoff, gegebenenfalls Schutzgas, und gegebenenfalls in Gegenwart protischer Lösungsmittel, dadurch gekennzeichnet, daß das System
A) eine Übergangsmetallverbindung von Elementen der 3. bis 8. und 1. Nebengruppe des Periodensystems und
B) eine, mindestens eine X-H-Funktion enthaltende, organische Verbindung, wobei X die Bedeutung Si, und Ge oder Sn hat,
enthält.

2. Katalysatorsystem nach Anspruch 1, dadurch gekennzeichnet, daß das System zur zusätzlichen Aktivierung der Initiierung noch einen Protonendonator in Form einer Carbonsäure mit 1 bis 4 C-Atomen enthält und/oder weitere Komplexbildner wie Kronenether, Triphenylphosphin oder Diglykolether.

3. Katalysatorsystem nach Anspruch 1 oder 2, dadurch gekennzeichnet, daß als Übergangsmetallverbindung Komplexe von Mangan, Eisen, Cobalt, Rhodium, Iridium, Platin, Titan, Vanadin oder Kupfer eingesetzt werden.

4. Katalysatorsystem nach Anspruch 1, 2 oder 3, dadurch gekennzeichnet, daß als Anionen oder Liganden der Übergangsmetallverbindung Halogene, Carboxylate, Alkoholate, Acetylacetonat, Acetessigester, Norbornadien, Cyclooactadien, Phosphine, Amine, Äther, Thioäther, Amide, Phospite und deren Derivate eingesetzt werden.

5. Katalysatorsystem nach Anspruch 1, 2, 3 oder 4, dadurch gekennzeichnet, daß als Übergangsmetallverbindung die Acetylacetonate von Co, Mn, Fe oder Chloro(1,5-cyclooctadien)-rhodium(I)-Dimer oder (Bicyclo(2,2,1)hepta-2,5-dien)-rhodium(I)chlorid-Dimer oder

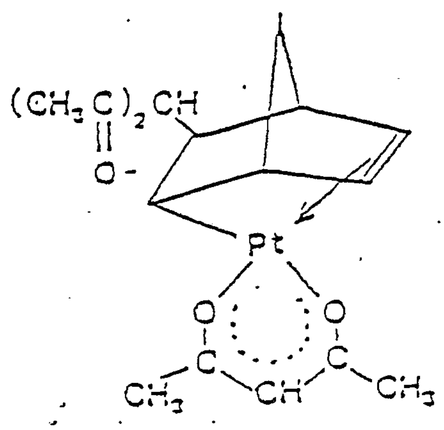

eingesetzt wird.

6. Katalysatorsystem nach Anspruch 1, 2, 3 oder 4, dadurch gekennzeichnet, daß als Übergangsmetallverbindung die Halogenide, Carboxylate und/oder Alkoholate von Kobalt, Mangan, Eisen, Titan, Zirkonium, Vanadium, Chrom, Kupfer oder Rhodium eingesetzt werden.

7. Katalysatorsystem nach Anspruch 1, 2, 3, 4, 5 oder 6, dadurch gekennzeichnet, daß als Si-H-Verbindung Silane, Siloxane oder Carbosilane mit mindestens einer Si-H-Gruppe eingesetzt werden.

8. Katalysatorsystem nach Anspruch 1, 2, 3, 4, 5, 6 oder 7, dadurch gekennzeichnet, daß die Komponente A in einer Menge von 1 bis 1000 Mol-ppm, bezogen auf das Monomere, eingesetzt wird, und das Molverhältnis A : B mindestens 1 : 1 beträgt.

9. Verwendung des Katalysatorsystems nach den Ansprüchen 1 bis 8 zur der Polymerisaton von einfach oder mehrfach ethylenisch ungesättigten Verbindungen.

10. Verwendung des Katalysatorsystems nach den Ansprüchen 1 bis 8 zur Vernetzung von doppelbindungshaltigen Oligomeren oder Polymeren.

11. Verwendung des Katalysatorsystems nach den Ansprüchen 1 bis 8 zur Herstellung von lösungsmittelfreien Beschichtungen und zur Herstellung von vernetzten oder unvernetzten Formmassen.

Patentansprüche für folgenden Vertragsstaat : ES

1. Verfahren zur Initiierung von Polymerisationsreaktionen ethylenisch ungesättigter Verbindungen mit einem Katalysatorsystem in Gegenwart von Luftsauerstoff, gegebenenfalls Schutzgas, und gegebenenfalls in Gegenwart protischer Lösungsmittel, dadurch gekennzeichnet, daß das Katalysatorsystem
A) eine Übergangsmetallverbindung von Elementen der 3. bis 8. und 1. Nebengruppe des Periodensystems und
B) eine, mindestens eine X-H-Funktion enthaltende, organische Verbindung, wobei X die Bedeutung Si, und Ge oder Sn hat,
enthält.

2. Verfahren nach Anspruch 1, dadurch gekennzeichnet, daß das System zur zusätzlichen Aktivierung der Initiierung noch einen Protonendonator in Form einer Carbonsäure mit 1 bis 4 C-Atomen enthält und/oder weitere Komplexbildner wie Kronenether, Triphenylphosphin oder Diglykolether.

3. Verfahren nach Anspruch 1 oder 2, dadurch gekennzeichnet, daß als Übergangsmetallverbindung Komplexe von Mangan, Eisen, Cobalt, Rhodium, Iridium, Platin, Titan, Vanadin oder Kupfer eingesetzt werden.

4. Verfahren nach Anspruch 1, 2 oder 3, dadurch gekennzeichnet, daß als Anionen oder Liganden der Übergangsmetallverbindung Halogene, Carboxylate, Alkoholate, Acetylacetonat, Acetessigester, Norbornadien, Cyclooctadien, Phosphine, Amine, Äther, Thioäther, Amide, Phosphite und deren Derivate eingesetzt werden.

5. Verfahren nach Anspruch 1, 2, 3 oder 4, dadurch gekennzeichnet, daß als Übergangsmetallverbindung die Acetylacetonate von Co, Mn, Fe oder Chloro(1,5-cyclooctadien)-rhodium(I)-Dimer oder (Bicyclo-(2,2,1)hept-2,5-dien)-rhodium(I)chlorid-Dimer oder

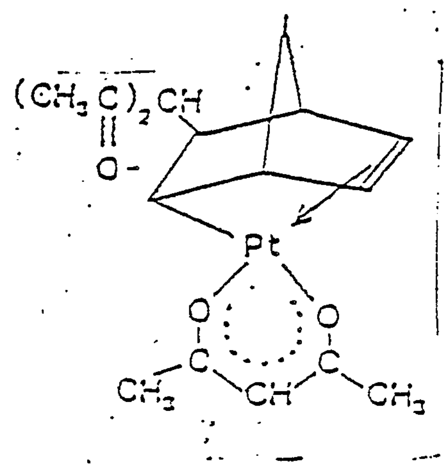

eingesetzt werden.

6. Verfahren nach Anspruch 1, 2, 3 oder 4, dadurch gekennzeichnet, daß als Übergangsmetallverbindung die Halogenide, Carboxylate und/oder Alkoholate von Kobalt, Mangan, Eisen, Titan, Zirkonium, Vanadium, Chrom, Kupfer oder Rhodium eingesetzt werden.

7. Verfahren nach Anspruch 1, 2, 3, 4, 5 oder 6, dadurch gekennzeichnet, daß als Si-H-Verbindung Silane, Siloxane oder Carbosilane mit mindestens einer Si-H-Gruppe eingesetzt werden.

8. Verfahren nach Anspruch 1, 2, 3, 4, 5, 6 oder 7, dadurch gekennzeichnet, daß die Komponente A in einer Menge von 1 bis 1000 Mol-ppm, bezogen auf das Monomere, eingesetzt wird, und das Molverhältnis A : B mindestens 1 : 1 beträgt.

9. Verwendung des Katalysatorsystems nach den Ansprüchen 1 bis 8 bei der Polymerisation von einfach oder mehrfach ethylenisch ungesättigten Verbindungen.

10. Verwendung des Katalysatorsystems nach den Ansprüchen 1 bis 8 zur Vernetzung von doppelbindungshaltigen Oligomeren oder Polymeren.

11. Verwendung des Katalysatorsystems nach den Ansprüchen 1 bis 8 zur Herstellung von lösungsmittelfreien Beschichtungen und zur Herstellung von vernetzten oder unvernetzten Formmassen.